# EUROPÄISCHE PATENTANMELDUNG

(11) **EP 1 630 384 A1**
(43) Veröffentlichungstag der Anmeldung: **01.03.2006**
(21) Anmeldenummer: 04020329.1
(22) Anmeldetag: 26.08.2004
(51) Int. Cl.: F02C 7/12, F02C 7/16, F02C 7/18, F02C 6/10

(54) **Verfahren zum Kühlen mindestens einer Turbinenstufe und/oder mindestens einer Brennkammer, Turbinenanlage und kombinierte Gas- und Dampfturbinenanlage**

(71) Anmelder: SIEMENS AKTIENGESELLSCHAFT, 80333 München (DE)
(72) Erfinder: Heilos, Andreas, 45468 Mülheim (DE); Köstlin, Berthold, 47057 Duisburg (DE); Lauer, Gerald, 45478 Mülheim (DE); Prade, Bernd, Dr., 45478 Mülheim (DE)

(57) **Zusammenfassung**

Im erfindungsgemäßen Verfahren zum Kühlen mindestens einer Turbinenstufe (5) und/oder mindestens einer Brennkammer (3) einer Turbine, welche neben der mindestens einen Turbinenstufe (5) und der mindestens einen Brennkammer (3) eine Verdichterstufe (1) zum Verdichten von Luft umfasst, wobei das Kühlen mit einem unter Druck stehenden Kühlfluid erfolgt, wird das unter Druck stehende Kühlfluid zumindest zum Teil von einer Anlage (11) zum Erzeugen eines unter Druck stehenden Fluids zugeführt, die nicht Bestandteil der Turbine ist.

## Beschreibung

Die vorliegende Erfindung betrifft ein Verfahren zum Kühlen mindestens einer Turbinenstufe und/oder mindestens einer Brennkammer. Des weiteren betrifft die Erfindung eine Turbinenanlage mit mindestens einer Turbine, welche eine Verdichterstufe, mindestens eine Brennkammer und mindestens eine Turbinenstufe umfasst, mit einer Anlage zum Erzeugen eines unter Druck stehenden Fluids und mit einer Kühlfluidzufuhr zum Zuführen eines Kühlfluids zur Brennkammer und/oder zur Turbinenstufe.

Gasturbinen umfassen in der Regel eine Verdichterstufe zum Verdichten angesaugter Luft, eine Brennkammer und mindestens eine Turbinenstufe Die in der Verdichterstufe verdichtete Luft wird mit Brennstoff vermischt, und das so erzeugte Luft-Brennstoffgemisch wird in der Brennkammer verbrannt. Die Verbrennungsabgase werden der Verdichterstufe zugeführt wo ihre thermische Energie in mechanische Energie umgewandelt wird.

Um die Wand der Brennkammer sowie die Turbinenteile vor den hohen Temperaturen der Verbrennung bzw. der Verbrennungsabgase zu schützen werden diese insbesondere bei Gasturbinen mittels eines Teils der verdichteten Luft gekühlt. Die Kühlluft geht dem Verbrennungsprozess zumindest zum Teil verloren, was die thermodynamische Wirksamkeit der Turbine verschlechtert.

Aufgabe der vorliegenden Erfindung ist es daher, ein Verfahren zum Kühlen mindestens einer Turbinenstufe und/oder mindestens einer Brennkammer einer Turbine zur Verfügung zu stellen, welches vorteilhaft für die thermodynamische Wirksamkeit der Turbine ist.

Eine weitere Aufgabe der vorliegenden Erfindung ist es, eine Turbinenanlage sowie eine kombinierte Gas- und Dampfturbinenanlage mit einer vorteilhaften Kühlung für eine Brennkammer und/oder eine Turbinenstufe einer Turbine zur Verfügung zu stellen.

Die erste Aufgabe wird durch ein Verfahren zum Kühlen mindestens einer Turbinenstufe und/oder mindestens einer Brennkammer einer Turbine nach Anspruch 1 gelöst, die zweite Aufgabe durch eine Turbinenanlage nach Anspruch 9 bzw. eine kombinierte Gas- und Dampfturbinenanlage nach Anspruch 18. Die abhängigen Ansprüche enthalten vorteilhafte Weiterbildungen der vorliegenden Erfindung.

Gemäß der Erfindung wird ein Verfahren zum Kühlen mindestens einer Turbinenstufe und/oder mindestens einer Brennkammer einer Turbine, welche neben der mindestens einen Turbinenstufe und der mindestens einen Brennkammer eine Verdichterstufe zum Verdichten von Luft umfasst zur Verfügung gestellt. Das Kühlen erfolgt mit einem unter Druck stehenden Kühlfluid. Im erfindungsgemäßen Verfahren wird das unter Druck stehende Kühlfluid zumindest zum Teil von einer Anlage zum Erzeugen eines unter Druck stehenden Fluids zugeführt die nicht Bestandteil der Turbine ist. Als Kühlfluid kann dabei insbesondere Stickstoff aus einer Luftzerlegungsanlage Verwendung finden.

Das erfindungemäße Verfahren beruht auf den folgenden Erkenntnissen:

Gasturbinenanlagen mit integrierter Vergasung von beispielsweise fossilen Brennstoffen (IGCC) umfassen eine Brennstoffvergasungsanlage, eine Gasreinigung, eine Luftzerlegungsanlage und mindestens eine Gasturbine. In der Brennstoffvergasungsanlage wird beispielsweise Kohle im Wesentlichen zu Kohlenmonoxid (CO) vergast. In Gegenwart von Wasser kann auch im geringeren Umfang Methan (CH₄) und Wasserstoff (H₂) entstehen.

Um das erforderliche Volumen des Vergasers zu vermindern und damit die Investitionskosten zu verringern, wird der Vergaser in den ausgeführten Anlagen typischerweise mit Sauerstoff anstelle von Luft versorgt. Der Brennstoffvergasungsanlage ist daher eine Luftzerlegungsanlage vorgeschaltet, welche den Stickstoff aus der Luft entfernt, bevor sie dem Vergasungsprozess zugeführt wird. Dabei fällt verdichteter Stickstoff an, also Stickstoff, welcher im Vergleich zu den Umgebungsbedingungen unter erhöhtem Druck steht. Der erhöhte Druck des Stickstoffes stellt einen Energieinhalt des Stickstoffes dar, der im weiteren Verlauf des Gasturbinenprozesses genutzt werden kann, indem er dem Prozess zugeführt wird und bei der hohen Temperatur des Gasturbinenprozesses Arbeit leistet.

Im Stand der Technik erfolgt die Zugabe des Stickstoffes in den Gasturbinenprozess entweder durch die Zugabe des Stickstoffes zum Brennstoff, also beispielsweise als Verdünnungsmedium für den Brennstoff, oder durch die Zugabe zur Verdichterluft.

Im erfindungsgemäßen Verfahren braucht der Stickstoff hingegen weder dem Brennstoff noch der Verdichterluft beigefügt zu werden, sondern er kann als Kühlfluid zum Kühlen der Brennkammer(n) und/oder der Turbinenstufe(n) dienen. Der nicht zu Kühlzwecken verwendete Anteil des Stickstoffes sowie insbesondere die nicht mehr zur Kühlung benötigte Verdichterluft können der Verbrennung zugeführt werden. Dies führt zu einer Absenkung der Flammentemperatur und zu einer Reduzierung der NOₓ-Emissionen. Bei gleich bleibender Brennkammeraustrittstemperatur der Verbrennungsabgase kann damit die für den Turbinenprozess thermodynamisch wirksame Turbineneintrittstemperatur angehoben und somit die Leistung und der Wirkungsgrad der Turbine bei gleich bleibender NOₓ-Emission erhöht werden. Alternativ kann auch bei gleich bleibender Leistung und gleich bleibendem Wirkungsgrad die Brennkammeraustrittstemperatur verringert werden, was eine Verringerung der NOₓ₋Emissionen zur Folge hat und außerdem die thermische Beanspruchung der Heißgas führenden Teile senkt.

Wird der Stickstoff dagegen in der üblicherweise in der Luftzerlegungsanlage anfallenden Menge dem Brennstoff beigemischt, so führt dies zu einer erheblichen Verminderung des Brennstoffheizwertes. Dies kann insbesondere für den Fall der Verbrennung im Diffusionsbetrieb erwünscht sein. Bei dieser Betriebsart wird der Brennstoff stromab des Brenners mit der Verbrennungsluft vermischt, wobei die Reaktionszone (Flammenfront) typischerweise den Bereich der höchsten lokalen Reaktivität einstellt. Weil die höchste Brennstoff-Luft-Gemischreaktivität typischerweise im Gebiet der stöchiometrischen Mischung bzw. leicht unterstöchiometrischem Gemisch auftritt, wird hierdurch die Verbrennung annähernd bei der brennstoffabhängigen (heizwertabhängigen) maximalen Temperatur stattfinden. Eine Verdünnung führt in diesem Sinne zu einer Absenkung dieser maximal in der Flamme lokal möglichen Temperatur, was sich günstig bezüglich der NOₓ-Emissionsverminderung auswirkt. Aufgrund des verringerten Heizwertes ist jedoch eine gegenüber unverdünntem Brennstoff erhöhte Strömungskapazität der Brennstoffpassagen in den Versorgungsleitungen und der Brennkammer notwendig. Bei begrenzter Strömungskapazität hat dies einen erhöhten Druckverlust des Brennstoffes beim Eintritt in die Brennkammer zur Folge. Der Gesamtwirkungsgrad von Gasturbinenanlagen ist jedoch insbesondere bei hohen Brennstoffmassenströmen umso schlechter, je höher der Druckverlust des Brennstoffes beim Eintritt in die Brennkammer ist. Daher ist man bestrebt, den Druckverlust möglichst gering zu halten.

Bei sehr niedrigen Gasturbinenleistungen bzw. im Leerlauf der Gasturbine und eingeschränkter Verfügbarkeit des Stickstoffes in diesem Betriebszustand stellt sich dann aber ggf. ein unerwünscht niedriger Druckverlust ein, was die Stabilität gegenüber Flammenschwingungen negativ beeinflusst. Daher ist bei Anlagen mit integrierter Vergasung von fossilen Brennstoffen der Leistungsbetrieb mit dem vergasten Brennstoff, dem sog. Synthesegas, nur in einem Bereich zwischen der Grundlast und einer minimalen Teillast möglich, wenn der Stickstoff dem aus der Brennstoffvergasungsanlage stammenden Synthesegas beigemischt wird. Durch das Verwenden des Stickstoffes zur Kühlung, insbesondere zur Kühlung der Turbinenstufe(n), können die beim Beimischen des Stickstoffes zum Brennstoff auftretenden Nachteile vermieden werden.

Die erhöhten Anforderungen an die Strömungskapazitäten der Brennstoffpassage in den Versorgungsleitungen und dem Brenner können im Stand der Technik aber auch vermieden werden, wenn der Stickstoff nicht dem Synthesegas, sondern der Verdichterluft beigemischt wird. Bei vollständiger Zugabe des gesamten Stickstoffes zur Verdichterluft wird die Verbrennungstemperatur des Synthesegases jedoch so hoch, dass im Falle der Verbrennung im Diffusionsbetrieb eine erhöhte Stickoxidbildung (NOₓ-Bildung) erfolgt. Auch ist die Reaktivität des unverdünnten Synthesegases im Vergleich zum verdünnten Synthesegas (bei Beimischung des Stickstoffes zum Brennstoff) oder gar im Vergleich zu Erdgas deutlich erhöht, was zur Gefahr einer Flammenstabilisierung in unmittelbarer Nähe von Brennerteilen führt. Dies kann im Extremfall zur Überhitzung von Brennerteilen führen. Es wird deshalb oft ein Teil des Stickstoffes dem Brennstoff beigemischt, und zwar in dem Ausmaße, wie es zur Einstellung einer moderaten Reaktivität und ausreichend erniedrigter Verbrennungstemperaturen bei hoher Leistung erforderlich ist. Der restliche Teil des Stickstoffes wird dann der Verdichterluft zugegeben. Auch hier können die mit dem Beimischen des Stickstoffes zur Verdichterluft auftretenden Probleme durch das Verwenden des Stickstoffes zur Kühlung, insbesondere zur Kühlung der Turbinenstufe(n), vermieden werden.

Weil die Temperatur des Stickstoffes niedriger ist, als die Temperatur der aus dem Verdichter stammenden Verdichterluft, kann bei Verwendung des Stickstoffes als Kühlfluid zudem mit einem geringeren Massenstrom als bei Verwendung der Verdichterluft als Kühlfluid die gleiche Kühlleistung erzielt werden, wodurch die für die Verbrennung verfügbare Menge an Luft und Stickstoff erhöht wird.

Außer dem Kühlfluid kann auch ein Teil der Verdichterluft zum Kühlen der mindestens einen Turbinenstufe Verwendung finden. Dadurch kann insbesondere sichergestellt werden, dass auch dann, wenn nicht genügend Stickstoff zur Verfügung steht, ausreichend Kühlfluid zum Kühlen der Turbinenstufe und/oder der Brennkammer vorhanden ist. Mit Zunahme des zur Verfügung stehenden Stickstoffes kann dann ein Drosseln oder gar ein Unterbinden der Zufuhr verdichteter Luft erfolgen. Das Verhältnis von Stickstoff zu verdichteter Luft im Kühlfluid kann beispielsweise mittels einer Regelung des Druckes in einer Plenum-Kammer erfolgen.

Wird der Stickstoff zur Kühlung stromab der ersten Turbinenleitstufe verwendet, so entfällt für diesen Anteil die ggf. erforderliche und vom Luftzerlegungsprozess abhängige zusätzliche Verdichtung. Dies wirkt sich positiv auf den Gesamtwirkungsgrad der Anlage aus.

In einer Weiterbildung des erfindungsgemäßen Verfahrens wird dem Kühlfluid Brennstoff beigemischt. Der beigemischte Brennstoff führt im Bereich der Turbinenstufe zu einer Nachheizung der Verbrennungsabgase und somit zu einer Carnotisierung des Gasturbinenprozesses, das heißt zu einer Annäherung an den Carnotprozess, welcher den maximal zu erreichenden Wirkungsgrad thermodynamischer Prozesse realisiert.

Eine erfindungsgemäße Turbinenanlage umfasst mindestens eine Turbine mit einer Verdichterstufe, mit mindestens einer Brennkammer und mit mindestens einer Turbinenstufe, eine Anlage zum Erzeugen eines unter Druck stehenden Fluids und eine Kühlfluidzufuhr zum Zuführen eines Kühlfluids zur Brennkammer und/oder zur Turbinenstufe. Sie zeichnet sich dadurch aus, dass als Kühlfluid das von der Anlage zum Erzeugen eines unter Druck stehenden Fluids erzeugte Fluid Verwendung findet. Die Turbinenanlage kann dabei insbesondere als Gasturbinenanlage ausgestaltet sein. Mit einer derartigen Turbinen- bzw. Gasturbinenanlage lässt sich insbesondere das erfindungsgemäße Verfahren realisieren.

Als Anlage zum Erzeugen eines unter Druck stehenden Fluids eignet sich bspw. eine Luftzerlegungsanlage, welche als Abfallprodukt der Luftzerlegung Stickstoff produziert. Um die Verwendung des Stickstoffes als Kühlfluid zu ermöglichen ist dann ein Stickstoffausgang mit der Kühlfluidzufuhr verbunden.

Die Turbinenanlage kann außerdem wenigstens eine Plenum-Kammer umfassen, in welcher die mindestens eine Brennkammer und/oder die mindestens eine Turbinenstufe wenigstens teilweise angeordnet ist bzw. sind. Die Plenum-Kammer ist dann Teil der Kühlfluidzufuhr.

Zudem kann die Verdichterstufe ebenfalls mit der Plenum-Kammer in Verbindung stehen, um dieser verdichtet Luft zuzuführen. Zum Regeln des Zustroms an verdichteter Luft kann ein Regler vorhanden sein. Die Plenum-Kammer bietet dabei die Möglichkeit, den Regler als Druckregler zum Einstellen des Druckes in der Plenum-Kammer auszubilden. Durch eine Druckreglung kann dann eingestellt werden, ob das Kühlfluid den gesamten Kühlfluidstrom oder lediglich einen Teil des Kühlfluidstroms bildet. Insbesondere solange kein Kühlfluid (bspw. in Form von Stickstoff) oder nur wenig Kühlfluid zur Verfügung steht, kann die Druckregelung so erfolgen, dass nur oder überwiegend verdichtete Luft in das Plenum eindringt und entsprechend als Kühlfluidstrom dient. Mit Zunahme der Menge an Kühlfluid kann die Zufuhr an verdichteter Luft über die Druckreglung vermindert und bei Bedarf völlig unterbunden werden.

Um eine Nachheizung der Verbrennungsabgase im Bereich der Turbinenstufe zu ermöglichen, kann die Turbinenanlage eine Brennstoffzufuhreinheit zum Zuführen von Brennstoff in das Kühlfluid umfassen. Durch das Zuführen des Brennstoffes in das Kühlfluid lässt sich ein Carnotisierung des Gasturbinenprozesses erreichen.

Das Zumischen von Brennstoff zu einem inerten Kühlmedium, wie es bspw. der Stickstoff darstellt, ist insbesondere von Vorteil, weil es nicht zu einer unerwünschten Reaktion des Kühlmediums mit dem Brennstoff, und damit zu einer Überhitzung innerhalb zu kühlender Bauteile (beispielsweise der Turbinenschaufeln) kommen kann.

Die erfindungsgemäße Gasturbinenanlage kann insbesondere auch eine Brennstoffvergasungsanlage umfassen. Der Brennstoffvergasungsanlage ist die Luftzerlegungsanlage vorgeschaltet, um der zur Brennstoffvergasung verwendeten Luft den Stickstoff zu entziehen.

Die Gasturbinenanlagen mit integrierter Vergasung von fossilen Brennstoffen finden insbesondere in kombinierten Gas- und Dampfturbinenkraftwerken (GuD-Kraftwerken) Verwendung. Eine erfindungsgemäße Turbinenanlage kann daher insbesondere als Gasturbine in einer kombinierten Gas- und Dampfturbinenanlage zum Einsatz kommen. Eine kombinierte Gas- und Dampfturbinenanlage umfasst neben den Bestandteilen der Gasturbinenanlage noch wenigstens einen der mindestens einen der Turbinenstufe nachgeschalteten Abhitze-Dampferzeuger, mindestens eine Dampfturbinenstufe sowie einen den Abhitze-Dampferzeuger mit der Dampfturbinenstufe verbindenden Dampf/Wasser-Kreislauf. Der Abhitze-Dampferzeuger wird dabei von der Abhitze der Gasturbinenanlage geheizt.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- Figur 1: zeigt ein Wärmeschaltplan für eine erfindungsgemäße kombinierte Gas- und Dampfturbinenanlage;
- Figur 2: zeigt einen Ausschnitt aus einer erfindungsgemäßen Gasturbinenanlage.

Die Gasturbinenanlage umfasst einen Verdichter 1, eine Brennkammer 3 sowie eine Turbinenstufe 5. Die Brennkammer 3 und die Turbinenstufe 5 sind dabei dem Verdichter 1 nachgeschaltet. Der Verdichter 1 dient zum Ansaugen und Verdichten von Umgebungsluft, welche der Brennkammer 3 als Oxidationsmittel für den Verbrennungsprozess zugeführt wird.

Die Brennkammer 3 steht über eine Brennstoffzufuhr 7 mit einer Brennstoffvergasungsanlage 9, welche beispielsweise als Kohlevergasungsanlage ausgebildet sein kann, in Verbindung. Mit Hilfe der verdichteten Luft wird das von der Brennstoffvergasungsanlage 9 als Brennstoff zur Verfügung gestellte Synthesegas, in der Brennkammer 3 verbrannt.

Zum Vergasen des Brennstoffes wird Sauerstoff benötigt, wozu der Brennstoffvergasungsanlage 9 Umgebungsluft zugeführt wird. Zum Steigern der Effektivität des Vergasungsprozesses ist der Brennstoffvergasungsanlage 9 eine Luftzerlegungsanlage 11 vorgeschaltet, die der Umgebungsluft vor dem Zuführen zur Brennstoffvergasungsanlage 9 den Stickstoff entzieht. Dieser Stickstoff stellt ein Abfallprodukt der Luftzerlegung dar.

Die Luftzerlegungsanlage 11 ist über einen Stickstoffausgang und Stickstoffleitungen 12, 13 sowohl mit der Brennkammer 3 als auch mit der Turbinenstufe 5 verbunden. Über den Stickstoffausgang und die Stickstoffleitungen 12, 13 wird der in der Luftzerlegungsanlage 11 anfallende Stickstoff der Brennkammer 3 bzw. der Turbinenstufe 5 zugeführt, um dort als Kühlfluid zu dienen. Außerdem kann auch ein Teil der vom Verdichter 1 verdichteten Luft als Kühlfluid zum Kühlen der Brennkammer 3 und/oder der Turbinenstufe 5 Verwendung finden.

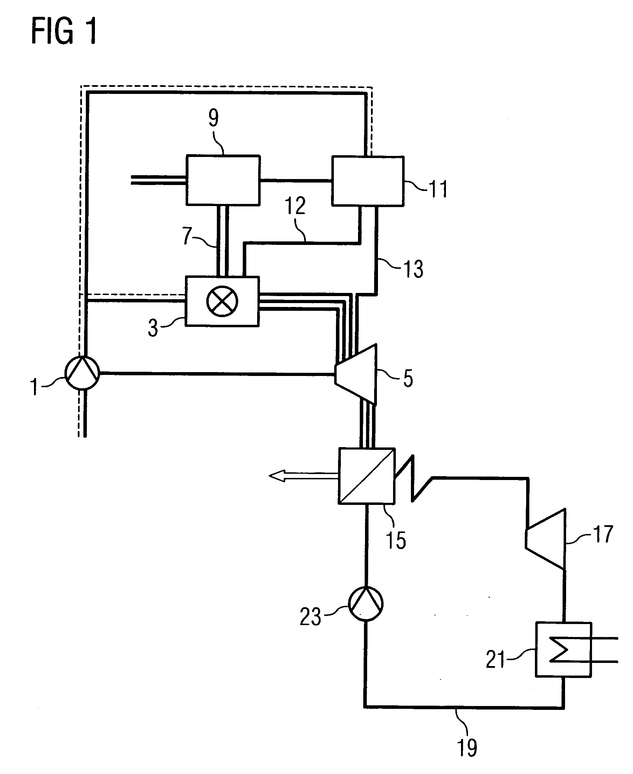

In der in Figur 1 dargestellten Gasturbinenanlage der kombinierten Gas- und Dampfturbinenanlage kann also entweder verdichtet Luft, Stickstoff oder eine Kombination aus verdichteter Luft und Stickstoff als Kühlfluid dienen. Um das Verhältnis von Stickstoff und verdichteter Luft im Kühlfluid einzustellen, ist außerdem eine in Fig. 1 nicht dargestellte Regeleinrichtung vorhanden.

Im Betrieb der Gasturbinenanlage werden die in der Brennkammer 3 entstehenden Verbrennungsabgase der Turbinenstufe 5 zugeführt, wo sie die Turbine antreiben. Die Turbinenstufe 5, insbesondere die Turbine, ist mechanisch mit dem Verdichter 1 gekoppelt, um diesen anzutreiben. In der Turbinenstufe 5 findet eine Entspannung und Abkühlung der Verbrennungsabgase statt.

Während die Verbrennungsabgase beim Eintritt in die Turbinenstufe 5 eine Temperatur von über 1000°C aufweisen, beträgt die Temperatur der entspannten und abgekühlten Abgase beim Austritt aus der Turbinenstufe nur noch etwas über 500°C. Diese Temperatur reicht aus, um eine Dampfturbinenanlage wirtschaftlich zu betreiben.

Die in Figur 1 dargestellte Dampfturbinenanlage der kombinierten Gas- und Dampfturbinenanlage umfasst einen Abhitze-Dampferzeuger 15, eine Turbinenstufe 17, im folgenden in Abgrenzung zur Turbinenstufe 5 der Gasturbinenanlage als Dampfturbinenstufe 17 bezeichnet, sowie einen Dampf/Wasser-Kreislauf 19, welcher den Abhitze-Dampferzeuger 15, die Dampfturbinenstufe 17, einen Kondensator 21 sowie eine Umwälzpumpe 23 einschließt.

Im Abhitze-Dampferzeuger 15 wird mittels eines Abhitzekessels, welcher durch die Abgase der Turbinenstufe 5 geheizt wird, Dampf erzeugt. Der Dampf wird der Dampfturbinenstufe 17 zugeführt und treibt diese an. Der aus der Dampfturbinenstufe 17 austretende Dampf kondensiert anschließend im Kondensator 21 und wird über die Umwälzpumpe 23 wieder dem Abhitze-Dampferzeuger 15 zugeführt.

Mit kombinierten Gas- und Dampfturbinenanlagen, wie etwa der beschriebenen Gas- und Dampfturbinenanlage, lassen sich höchste thermische Wirkungsgrade erzielen.

Es sei an dieser Stelle erwähnt, dass die in Figur 1 gezeigte Schaltung lediglich eine von vielen Möglichkeiten zum Schalten von kombinierten Gas- und Dampfturbinenanlagen darstellt. Weitere Beispiele für Schaltungen von kombinierten Gas- und Dampfturbinenanlagen sind beispielsweise dem Buch "Energietechnik" von Richard A. Zahoransky, Vieweg-Verlag zu entnehmen.

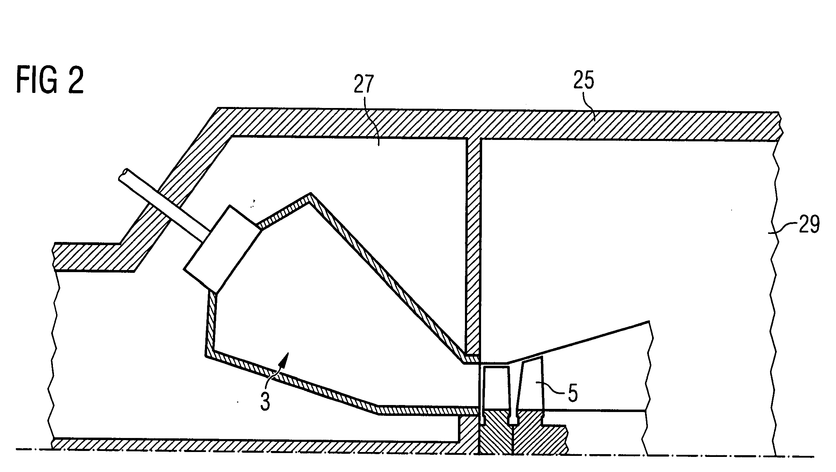

Figur 2 zeigt einen Ausschnitt aus der Gasturbinenanlage der in Figur 1 dargestellten kombinierten Gas- und Dampfturbinenanlage. Die Figur zeigt einen Längsschnitt entlang der Längsachse der Anlage. Es sind die Brennkammer 3 und ein Teil der Turbinenstufe 5 zu erkennen. Die Brennkammer 3 und die Turbinenstufe 5 sind in einem Gehäuse 25 angeordnet, wobei das Volumen zwischen der Gehäusewand einerseits und der Brennkammer bzw. der Turbinenstufe 5 andererseits Plenum-Kammern 27, 29 bildet. Die Plenum-Kammern 27, 29 sind Teil der Kühlfluidzufuhr zur Brennkammer 3 bzw. zur Turbinenstufe 5 und weisen Durchtrittsöffnungen zum Durchtritt von Kühlfluid in die Brennkammer 3 bzw. die Turbinenstufe 5 auf.

Die Plenum-Kammern 27, 29 stehen mit den Stickstoffleitungen 12, 13 in Verbindung. Darüber hinaus stehen die Plenum-Kammern 27, 29 auch mit dem Verdichter 1 zur Zufuhr von verdichteter Luft in Verbindung. Sowohl der Stickstoff als auch die verdichtete Luft können als Kühlfluid zum Kühlen der Brennkammer 3 bzw. der Turbinenstufe 5 verwendet werden.

Den Plenum-Kammern 27, 29 ist ein Druckregler (nicht dargestellt) zugeordnet, welcher beispielsweise den Druck des Stickstoffes in den Plenum-Kammern 27,29 regelt. Mittels der Druckregelung lässt sich dann der Anteil von verdichteter Luft zu Stickstoff im Kühlfluid einstellen. Insbesondere wenn nicht ausreichend Stickstoff zur Verfügung steht, kann der Anteil an verdichteter Luft im Kühlfluid hoch sein. Mit zunehmender Menge an zur Verfügung stehendem Stickstoff kann der Druck des Stickstoffes so weit erhöht werden, dass der Anteil an verdichteter Luft im Kühlfluid abnimmt. Insbesondere kann die Zufuhr von verdichteter Luft zum Kühlfluid auch vollständig unterbunden werden.

Des Weiteren kann die Gasturbinenanlage eine Brennstoffzufuhr zum Zuführen von Brennstoff, beispielsweise Synthesegase, in das in den Plenum-Kammern 27, 29'befindliche Kühlfluid aufweisen. Der zugeführte Brennstoff kann dann zu einer Nachheizung der Verbrennungsabgase im Bereich der Turbinenstufe 5 Verwendung finden. Vorzugsweise ist daher insbesondere die Plenum-Kammer 29, welche die Turbinenstufe 5 umschließt, mit einer derartigen Brennstoffzuleitung ausgestattet.

Das erfindungsgemäße Verfahren wurde mit Hinblick auf die Luftzerlegungsanlage einer Brennstoffvergasungsanlage als Produzent des Kühlfluids beschrieben. Es soll jedoch nicht unerwähnt bleiben, dass dieselben Vorteile auch dann erzielt werden können, wenn das Kühlfluid nicht aus der Luftzerlegungsanlage einer Brennstoffvergasungsanlage stammt, solange das Kühlfluid der Turbine von extern zugeführt wird, d.h. solange das Kühlfluid nicht der vom Verdichter verdichteten Luft entnommen wird.

## Patentansprüche

1. Verfahren zum Kühlen mindestens einer Turbinenstufe (5) und/oder mindestens einer Brennkammer (3) einer Turbine, welche neben der mindestens einen Turbinenstufe (5) und der mindestens einen Brennkammer (3) eine Verdichterstufe (1) zum Verdichten von Luft umfasst, wobei das Kühlen mit einem unter Druck stehenden Kühlfluid erfolgt,
**dadurch gekennzeichnet , dass** das unter Druck stehende Kühlfluid zumindest zum Teil von einer Anlage (11) zum Erzeugen eines unter Druck stehenden Fluids zugeführt wird, die nicht Bestandteil der Turbine ist.

2. Verfahren nach Anspruch 1,
**dadurch gekennzeichnet , dass** als Kühlfluid Stickstoff aus einer Luftzerlegungsanlage (11) Verwendung findet.

3. Verfahren nach Anspruch 1 oder 2,
**dadurch gekennzeichnet , dass** ein nicht für das Kühlen der Turbinenstufe (5) und/oder der Brennkammer (3) benötigter Teil des Kühlfluids der Verbrennung in der Brennkammer (3) zugeführt wird.

4. Verfahren nach Anspruch 1, 2 oder 3,
**dadurch gekennzeichnet , dass** außer dem Kühlfluid auch aus der Verdichterstufe (1) der Turbine stammende verdichtete Luft zum Kühlen Verwendung findet.

5. Verfahren nach Anspruch 4,
**dadurch gekennzeichnet , dass** die verdichtete Luft dann zum Kühlen Verwendung findet, wenn die Anlage (11) zum Erzeugen eines unter Druck stehenden Fluids nicht ausreichend Kühlfluid zum Kühlen der Turbinenstufe (5) und/oder der Brennkammer (3) zur Verfügung stellt.

6. Verfahren nach Anspruch 5,
**dadurch gekennzeichnet , dass** mit Zunahme des zur Verfügung stehenden Kühlfluids ein Drosseln oder Unterbinden der Verwendung von verdichteter Luft zum Kühlen erfolgt.

7. Verfahren nach einem der Ansprüche 4 bis 6,
**dadurch gekennzeichnet , dass** das Einstellen des Verhältnisses von Kühlfluid und verdichteter Luft beim Kühlen mittels einer Regelung des Druckes in einer Plenum-Kammer (27,29) erfolgt.

8. Verfahren nach einem der Ansprüche 1 bis 7,
**dadurch gekennzeichnet , dass** dem Kühlfluid Brennstoff beigemischt wird.

9. Turbinenanlage, insbesondere Gasturbinenanlage, mit
- mindestens einer Turbine, welche eine Verdichterstufe (1), mindestens eine Brennkammer (3) und mindestens eine Turbinenstufe (5) umfasst,
- einer Anlage (11) zum Erzeugen eines unter Druck stehenden Fluids und
- einer Kühlfluidzufuhr (12, 13, 27, 29) zum Zuführen eines Kühlfluids zur Brennkammer (3) und/oder zur Turbinenstufe (5),
**dadurch gekennzeichnet , dass** das von der Anlage (11) zum Erzeugen eines unter Druck stehenden Fluids erzeugte Fluid als Kühlfluid Verwendung findet.

10. Turbinenanlage nach Anspruch 9,
**dadurch gekennzeichnet , dass** als Anlage (11) zum Erzeugen eines unter Druck stehenden Fluids eine Luftzerlegungsanlage (11) vorhanden ist, welche als Abfallprodukt der Luftzerlegung Stickstoff produziert und einen Stickstoffausgang zum Abgeben des Stickstoffes als Kühlfluid an die Kühlfluidzufuhr (12, 13, 27, 29) aufweist.

11. Turbinenanlage nach Anspruch 9 oder 10,
**gekennzeichnet durch** wenigstens eine Plenum-Kammer (27, 29) in der die mindestens eine Brennkammer (3)und/oder die mindestens eine Turbinenstufe (5) wenigstens teilweise angeordnet ist bzw. sind, wobei die wenigstens eine Plenum-Kammer (27, 29) Teil der Kühlfluidzufuhr ist.

12. Turbinenanlage nach Anspruch 11,
**dadurch gekennzeichnet , dass** die Verdichterstufe (1) mit der wenigstens einen Plenum-Kammer (27, 29) zur Zufuhr von verdichteter Luft in Verbindung steht.

13. Turbinenanlage nach Anspruch 12,
**gekennzeichnet durch** einen Regler zum Regeln des Zustroms an verdichteter Luft in die wenigstens eine Plenum-Kammer (27, 29).

14. Turbinenanlage nach Anspruch 13,
**dadurch gekennzeichnet , dass** der Regler als Druckregler zum Einstellen des Druckes in der wenigstens einen Plenum-Kammer (27, 29) ausgebildet ist.

15. Turbinenanlage nach einem der Ansprüche 9 bis 14,
**gekennzeichnet durch** eine Brennstoffzufuhreinheit zum Zuführen von Brennstoff in das Kühlfluid.

16. Turbinenanlage nach Anspruch 15,
**dadurch gekennzeichnet , dass** das Kühlfluid ein inertes Kühlfluids ist.

17. Turbinenanlage nach einem der Ansprüche 9 bis 16,
**gekennzeichnet durch** eine Vergasungsanlage (9) zur Brennstoffvergasung.

18. Kombinierte Gas- und Dampfturbinenanlage mit einer Gasturbinenanlage nach einem der Ansprüche 9 bis 17, einem der Turbinenstufe (5) nachgeschalteten Abhitze-Dampferzeuger (15), mindestens einer Dampfturbinenstufe (17) und einem den Abhitze-Dampferzeuger (15) mit der Dampfturbinenstufe (17) verbindenden Dampf/Wasser-Kreislauf (19).
